# EUROPEAN PATENT APPLICATION

(11) **EP 4 678 703 A1**
(43) Date of publication of application: **14.01.2026**
(21) Application number: 24770479.4
(22) Date of filing: 22.02.2024
(51) Int. Cl.: C09D 11/328, C09D 7/20, C09D 11/38

(54) **INKJET INK AND TABLET**

(30) Priority: 10.03.2023 JP 2023038061
(71) Applicant: Toppan Holdings Inc., Tokyo 110-0016 (JP)
(72) Inventor: HOSHINO, Yuichi, Tokyo 110-0016 (JP); KOSEKI, Seiya, Tokyo 110-0016 (JP); SAITO, Masatoshi, Tokyo 110-0016 (JP); HASHIMOTO, Risa, Tokyo 110-0016 (JP); MIYAZAWA, Yasuhisa, Tokyo 110-0016 (JP); UCHIYAMA, Hiromitsu, Tokyo 110-0016 (JP)
(74) Representative: TBK
(86) International application number: PCT/JP2024/006626
(87) International publication number: WO 2024/190366

(57) **Abstract**

The disclosure provides an inkjet ink in which a food pigment comprising at least sodium copper chlorophyllin is dispersed in a dispersion medium comprising alcohol, and which prevents occurrence of aggregates causing head failure even after long-term storage, and also provides a tablet having a printed portion printed by the inkjet ink. An inkjet ink according to the present embodiment comprises a pigment and a monovalent alcohol, wherein the pigment consists solely of sodium copper chlorophyllin; the monovalent alcohol consists solely of ethanol or solely of 1-propanol; the sodium copper chlorophyllin has a concentration in the range of 1 mass% or more and 15 mass% or less relative to the total mass of the ink; the ethanol has a concentration in the range of 6.5 mass% or more and 20 mass% or less relative to the total mass of the ink; and the 1-propanol has a concentration in the range of 6.5 mass% or more and 15 mass% or less relative to the total mass of the ink.

## Description

### [Technical Field]

The present invention relates to inkjet inks and tablets.

### [Background Art]

Inkjet printing inks (which may be simply referred to as inkjet ink(s) hereinafter) include those inks which are edible. A technique related to an edible inkjet ink is disclosed, for example, in PTL 1.

Edible inkjet inks include, for example, inks in which an edible pigment (colorant) containing at least sodium copper chlorophyllin (Chlorophyllin copper complex sodium, CAS Number: 28302-36-5) is dispersed in a dispersion medium containing alcohol.

### [Citation List]

### [Patent Literature]

PTL 1: JP2006-169301A

### [Summary of the Invention]

### [Technical Problem]

If such an inkjet ink containing sodium copper chlorophyllin and alcohol is stored for a long period of time, e.g., about nine months, aggregates may form in the ink, which may cause blockages inside the inkjet head, resulting in head failure.

The present invention has been made in light of the circumstances set forth above and aims to provide an inkjet ink in which a food pigment containing at least sodium copper chlorophyllin is dispersed in a dispersion medium containing alcohol (monovalent alcohol, in particular), and which can prevent occurrence of head failure due to aggregates causing blockages inside the inkjet head even after long-term storage of the inkjet ink, and to provide a tablet having a printed portion printed by the inkjet ink.

### [Solution to Problems]

An inkjet ink according to an aspect of the present invention comprises a pigment and a monovalent alcohol, wherein the pigment consists solely of sodium copper chlorophyllin; the monovalent alcohol consists solely of ethanol or solely of 1-propanol; the sodium copper chlorophyllin has a concentration in a range of 1 mass% or more and 15 mass% or less relative to the total mass of the ink; the ethanol has a concentration in a range of 6.5 mass% or more and 20 mass% or less relative to the total mass of the ink; and the 1-propanol has a concentration in a range of 6.5 mass% or more and 15 mass% or less relative to the total mass of the ink.

An inkjet ink according to another aspect of the present invention comprises a pigment and a monovalent alcohol, wherein the pigment comprises sodium copper chlorophyllin and other colorants different from the sodium copper chlorophyllin; the monovalent alcohol consists solely of ethanol or solely of 1-propanol; the sodium copper chlorophyllin has a concentration in a range of 1 mass% or more and 15 mass% or less relative to the total mass of the ink; the other colorants have a concentration of 50 mass% or less relative to a mass of the sodium copper chlorophyllin; the ethanol has a concentration in a range of 6.5 mass% or more and 20 mass% or less relative to the total mass of the ink; and the 1-propanol has a concentration in a range of 6.5 mass% or more and 15 mass% or less relative to the total mass of the ink.

### [Advantageous Effects of the Invention]

According to an aspect of the present invention, occurrence of head failure due to aggregates causing blockages inside the inkjet head can be prevented even after long-term storage of the inkjet ink in which a food pigment comprising at least sodium copper chlorophyllin is dispersed in a dispersion medium containing alcohol (monovalent alcohol, in particular).

### [Brief Description of the Drawings]

Fig. 1 is a schematic cross-sectional view illustrating an example of a tablet (uncoated tablet) according to an embodiment of the present invention.
Fig. 2 is a schematic cross-sectional view illustrating an example of a tablet (film-coated tablet) according to an embodiment of the present invention.
Fig. 3 is a diagram illustrating an example of a printed image on a tablet (uncoated tablet) according to an embodiment of the present invention.
Fig. 4 is a diagram illustrating an example of a printed image on a tablet (film-coated tablet) according to an embodiment of the present invention.

### [Description of the Embodiments]

An inkjet ink according to an embodiment of the present invention is an inkjet ink which is used, for example, for printing characters, an image, or the like on the surface of a pharmaceutical tablet by inkjet printing. The following description explains in detail the formulation of an inkjet ink according to an embodiment of the present invention and the configuration of a tablet including a printed portion which is printed using the inkjet ink.

### [Formulation of inkjet ink]

### (Pigment and dispersion medium)

The inkjet ink of the present embodiment comprises at least a food pigment and a dispersion medium in which the food pigment can be dispersed. The food pigment of the present embodiment comprises at least sodium copper chlorophyllin. The content of the sodium copper chlorophyllin in the present embodiment is in the range of 1 mass% or more and 15 mass% or less relative to the total mass of the inkjet ink.

The dispersion medium of the present embodiment comprises at least a monovalent alcohol, either ethanol or 1-propanol (NPA). The content of the ethanol in the present embodiment is in the range of 6.5 mass% or more and 20 mass% or less relative to the total mass of the inkjet ink. The content of the 1-propanol (NPA) in the present embodiment is in the range of 6.5 mass% or more and 15 mass% or less relative to the total mass of the inkjet ink.

An inkjet ink with this formulation can reduce deterioration of printability even after being stored for a long period of time. It should be noted that if the content of the ethanol or 1-propanol is less than 6.5 mass% relative to the total mass of the inkjet ink, the ink drying properties may decrease and the ink on the printing surface may transfer to other tablets. If the content of the ethanol exceeds 20 mass% relative to the total mass of the inkjet ink, formation of aggregates derived from sodium copper chlorophyllin described later may be promoted, and the aggregates may cause blockages inside the inkjet head, by which head failure may occur. If the content of the 1-propanol exceeds 15 mass% relative to the total mass of the inkjet ink, formation of aggregates derived from sodium copper chlorophyllin described later may be promoted, and the aggregates may cause blockages inside the inkjet head, by which head failure may occur.

The effects achieved by the inkjet ink of the present embodiment will be described.

In the technical field of the inkjet ink related to the present embodiment, if printability is adversely affected by sediments formed by aggregation of the pigment components or the like contained in the ink or by the impurities contained in the ink, generation of sediments or impurities has been suppressed using a method of purifying the pigment components or the like contained in the ink or a method of adding a nitrite salt to the ink.

In this regard, the inkjet ink of the present embodiment suppresses the occurrence of such precipitation by adjusting the amount of the monovalent alcohol contained in the ink as a dispersion medium to thereby reduce deterioration of printability. More specifically, the present inventors have found that sodium copper chlorophyllin added to an ink comprising alcohol (monovalent alcohol, in particular) forms alcohol-insoluble aggregates in the ink and the size of the aggregates tends to increase with time. In this regard, the present inventors have adjusted the amount of the alcohol (monovalent alcohol, in particular) contained in the inkjet ink, thereby achieving the effect of suppressing occurrence of aggregates derived from the sodium copper chlorophyllin even after long-term storage of the ink, and the effect of preventing the occurrence of head failure due to the aggregates causing blockages inside the inkjet head.

In the present embodiment, the term "aggregates derived from the sodium copper chlorophyllin" refers to an aggregate of materials which has a chemical structure including a part that comprises a substance having a chlorophyll-derived skeleton as a main component, with the content of the substance having a chlorophyll-derived skeleton being 80 mass% or more in the solid components of the aggregates excluding liquid components relative to the total mass of the aggregate, and which is insoluble in purified water (at a liquid temperature of 20±5°C., the amount of solvent required for dissolving 1 g of solute being 10,000 mL or more) but is soluble in methanol (methanol with an ammonia base) (at a liquid temperature of 20±5°C., the amount of solvent required for dissolving 1 g of solute being less than 10,000 mL). The term "substance having a chlorophyll-derived skeleton" refers to a compound or a mixture with a chemical structure having a part that has a heterocyclic hydrocarbon skeleton which is characteristic of chlorophyll including porphyrin (CAS No. 101-60-0) and chlorin (CAS No. 2683-84-3) as typical examples. Sodium copper chlorophyllin itself is soluble both in purified water and methanol; however, during long-term storage, interactions with solvents such as a monovalent alcohol may allow the surrounding chemical structures that have substituted the side chains of the chlorophyll-derived skeleton to change, and the sodium copper chlorophyllin may gradually change to a material (e.g., copper chlorophyll (CAS No. 15739-09-0)) comprising the substance having the chlorophyll-derived skeleton that has been imparted with purified water-insoluble characteristics, and this may become the cause of formation of aggregates during long-term storage.

Such aggregates are usually present in trace amounts as impurities in unfiltered sodium copper chlorophyllin solutions, but are usually removed by filtration after dissolution. The problem is the aggregates generated as a result of long-term storage.

Aggregates derived from the sodium copper chlorophyllin have a maximum absorption (absorption peak) only in the wavelength range of 400 nm to 410 nm, as properties characteristic of a substance having a chlorophyll-derived skeleton (excluding sodium copper chlorophyllin itself). Therefore, occurrence of aggregates derived from the sodium copper chlorophyllin can be determined by measuring the UV-visible absorption spectrum. Sodium copper chlorophyllin itself is distinguishable since it has a maximum absorption (absorption peak) in both the wavelength range of 400 nm to 410 nm and the wavelength range of 623 nm to 633 nm.

In the inkjet ink of the present embodiment, the content of the ethanol or 1-propanol is preferably in the range of 6.5 mass% or more and 12 mass% or less, and more preferably in the range of 6.5 mass% or more and 10 mass% or less, relative to the total mass of the inkjet ink. With this formulation, occurrence of aggregates derived from the sodium copper chlorophyllin can be reliably suppressed even when the inkjet ink is stored for a long period of time, and therefore deterioration in printability can be reliably reduced.

In the inkjet ink of the present embodiment, the content of the sodium copper chlorophyllin that is a food pigment is preferably in the range of 4 mass% or more and 10 mass% or less, and more preferably in the range of 4.5 mass% or more and 9 mass% or less, relative to the total mass of the inkjet ink. With this formulation, occurrence of aggregates derived from the sodium copper chlorophyllin can be further suppressed even when the inkjet ink is stored for a long period of time, and therefore deterioration in printability can be further reduced. If the content of the sodium copper chlorophyllin is less than 1 mass% relative to the total mass of the inkjet ink, readability (visibility) of the printed characters or the like may tend to be deteriorated, and light resistance may also tend to be deteriorated. If the content of the sodium copper chlorophyllin exceeds 15 mass% relative to the total mass of the inkjet ink, occurrence of aggregates derived from the sodium copper chlorophyllin may become pronounced, and this may tend to deteriorate printability.

The inkjet ink of the present embodiment may comprise at least one pigment (colorant), e.g., Tartrazine, Erythrosine, or Brilliant Blue FCF, other than the sodium copper chlorophyllin. Sodium copper chlorophyllin is a green food pigment, and Tartrazine is a yellow food pigment, known as Yellow No. 4 pigment (FDA Name: FD & C Yellow No. 5, Color Index Name: Acid Yellow 23, CAS Number: 1934-21-0). Erythrosine is a red food pigment, also known as Red No. 3 pigment (FDA Name: FD & C Red No. 3, Color Index Name: Acid Red 51, CAS Number: 16423-68-0), and Brilliant Blue FCF is a blue food pigment, also known as Blue No. 1 pigment (FDA Name: FD & C Blue No. 1, Color Index Name: Food Blue 2, CAS Number: 3844-45-9). With this formulation, the inkjet ink can have a gray hue. The inkjet ink of the present embodiment may comprise New Coccine as a pigment other than the sodium copper chlorophyllin. New Coccine is a red food pigment, known as Red No. 102 pigment (Color Index Name: Acid Red 18, CAS Number: 2611-82-7). With this formulation, the inkjet ink can have a gray hue.

With the formulation mentioned above, occurrence of aggregates derived from the sodium copper chlorophyllin can be further suppressed even when the inkjet ink is stored for a long period of time, and can prevent head failure due to the aggregates causing blockages inside the inkjet head.

The Color Index Name mentioned above is determined by the American Association of Textile Chemists and Colorists. The FDA Name mentioned above is determined by the U.S. FDA (Food and Drug Administration). Pigments (materials) that can be used in the present embodiment have been specified by CAS Numbers, but the present invention is not limited to these. As a matter of course, for example, pigments that can be used in the present embodiment include those pigments which have the same names as those of the pigments (materials) mentioned in the present embodiment but have different CAS Numbers because of being geometric isomers, stereoisomers, materials comprising isotopes, or salts thereof. If there are no isomers or the like, or if pigments (materials) that can be used are specified (limited), the materials (compounds) having the CAS Numbers indicated in the present embodiment can be used as they are.

In the inkjet ink of the present embodiment, the content of pigments (colorants) other than the sodium copper chlorophyllin in the food pigments may be 50 mass% or less relative to the mass of the sodium copper chlorophyllin. With this formulation, occurrence of aggregates derived from the sodium copper chlorophyllin can be further suppressed even when the inkjet ink is stored for a long period of time, and therefore deterioration in printability can be further reduced. If the content of pigments (colorants) other than the sodium copper chlorophyllin in the food pigments exceeds 50 mass% relative to the mass of the sodium copper chlorophyllin, the printed portion may have a high chroma level, with discoloration thereof after light exposure appearing to be pronounced, and accordingly may be recognized as having low light resistance.

In the inkjet ink of the present embodiment, the dispersion medium may further comprise propylene glycol, and the content of the propylene glycol is preferably in the range of 10 mass% or more and 30 mass% or less, and more preferably in the range of 23 mass% or more and 30 mass% or less, relative to the total mass of the inkjet ink. With this formulation, drying speed at the nozzle of the inkjet head during printing may be reduced and deterioration in printability can be further reduced.

### (Other pigments)

As described above, the food pigments contained in the inkjet ink of the present embodiment necessarily comprises sodium copper chlorophyllin; however, there are no particular restrictions to using pigments other than sodium copper chlorophyllin as long as they are edible. Pigments added to the inkjet ink of the present embodiment can be appropriately selected from, for example, known synthetic and natural food pigments.

The synthetic food pigments include, for example, tar pigments, natural pigment derivatives, natural synthetic pigments, and the like. Examples of the tar pigments include Food Red No. 2 (Amaranth, FDA Name: FD & C Red No. 2, Color Index Name: FD & C Red No. 2, Color Index Name: Acid Red 27, CAS Number: 915-67-3), Food Red No. 40 (Allura Red AC, FDA Name: FD & C Red No. 40, Color Index Name: Food Red 17, CAS Number: 25956-17-6), Food Red No. 102 (New Coccine, Color Index Name: Acid Red 18, CAS Number: 2611-82-7), Food Red No. 104 (Phloxine, FDA Name: D & C Red No. 28, Color Index Name: Acid Red 92, CAS Number: 18472-87-7), Food Red No. 105 (Rose Bengal, Color Index Name: Acid Red 94, CAS Number: 632-69-9), Food Red No. 106 (Acid Red, Color Index Name: Acid Red 52, CAS Number: 3520-42-1), Food Yellow No. 4 (Tartrazine, FDA Name: FD & C Yellow No. 5, Color Index Name: Acid Yellow 23, CAS Number: 1934-21-0), Food Yellow No. 5 (Sunset Yellow FCF, FDA Name: FD & C Yellow No. 6, Color Index Name: Food Yellow 3, CAS Number: 2783-94-0), Food Blue No. 1 (Brilliant Blue FCF, FDA Name: FD & C Blue No. 1, Color Index Name: Food Blue 2, CAS Number: 3844-45-9), Food Blue No. 2 (Indigo Carmine, FDA Name: FD & C Blue No. 2, Color Index Name: Acid Blue 74, CAS Number: 860-22-0), Food Red No. 2 Aluminum Lake (FD & C Red No. 2 Aluminum Lake), Food Red No. 3 Aluminum Lake (FD & C Red No. 3 Aluminum Lake), Food No. 40 Aluminum Lake (FD & C Red No. 40 Aluminum Lake), Food Yellow No. 4 Aluminum Lake (FD & C Yellow No. 5 Aluminum Lake), Food Yellow No. 5 Aluminum Lake (FD & C Yellow No. 6 Aluminum Lake), Food Blue No. 1 Aluminum Lake (FD & C Blue No. 1 Aluminum Lake), and Food Blue No. 2 Aluminum Lake (FD & C Blue No. 2 Aluminum Lake). Examples of the natural pigment derivatives include norbixin potassium. Examples of the natural synthetic pigments include β-carotene and riboflavin.

Examples of the natural food pigments include anthocyanin pigments, carotenoid pigments, quinone pigments, flavonoid pigments, betaine pigments, Monascus pigments, and other pigments originating from natural products. Examples of the anthocyanin flavonoid pigments include red radish pigment, red cabbage pigment, red rice pigment, elderberry pigment, cowberry pigment, gooseberry pigment, cranberry pigment, salmon berry pigment, perilla pigment, sim blueberry pigment, strawberry pigment, dark sweet cherry pigment, cherry pigment, hibiscus pigment, huckleberry pigment, grape juice pigment, grape skin pigment, black currant pigment, blackberry pigment, blueberry pigment, plum pigment, whortleberry pigment, boysenberry pigment, mulberry pigment, purple yam pigment, purple corn pigment, Chinese purple yam pigment, raspberry pigment, red currant pigment, loganberry pigment, and other anthocyanin pigments. Examples of the carotenoid pigments include annatto pigment, gardenia yellow pigment, and other carotenoid pigments. Examples of the quinone pigments include cochineal pigment, lithospermum root pigment, lac pigment, and other quinone pigments. Examples of the flavonoid pigments include safflower yellow pigment, kaoliang pigment, onion pigment, and other flavonoid pigments. Examples of the betaine pigments include beet red pigment. Examples of the Monascus pigments include Monascus purpureus pigment, and Monascus yellow pigment. Examples of other pigments originating from natural products include turmeric pigment, clerodendrum trichotomum pigment, gardenia red pigment, and spirulina blue pigment.

The hue of the inkjet ink can be controlled by the combination of the above pigments or by the combination of the contents of the pigments. For example, if the hue of the inkjet ink is desired to be gray, a green pigment of sodium copper chlorophyllin, a red pigment of New Coccine (Food Red No. 102) or Erythrosine (Food Red No. 3), and a blue pigment of Brilliant Blue FCF (Food Blue No. 1) may be selected as food pigments. Also, for example, if the hue of the inkjet ink is desired to be yellow-green, a green pigment of sodium copper chlorophyllin and a yellow pigment of Tartrazine (Food Yellow No. 4) may be selected as food pigments.

### (Other dispersion media)

As described above, the inkjet ink of the present embodiment comprises a dispersion medium in order to disperse the above pigments. Examples of the dispersion medium that can be added to the inkjet ink of the present embodiment include purified water and propylene glycol, other than the ethanol and 1-propanol mentioned above. In order to prevent drying of the ink at the nozzle, it is preferable to add propylene glycol to the ink by 1 mass% or more and 30 mass% or less. If the content is less than 1 mass%, the ink may easily dry and cause clogging. If the content exceeds 30 mass%, an excessively long time may be taken for the printed surfaces of the pharmaceutical tablets to dry, and when these tablets are brought into contact with each other, undried ink of one tablet may adhere to another tablet and cause smearing.

Pharmaceutical tablets are not particularly limited in the present embodiment. However, pronounced effects tend to be exhibited when the inkjet ink is used for those tablets whose surfaces are covered with film coatings. This is considered to be because, when printing is performed for the surface of a tablet, the pigment components easily remain on the surface, if the tablet is film-coated, due to having fewer voids than does an uncoated tablet, and thus because, when the printed surface is affected by light or moisture from outside, the effect of these on the pigments is stronger for the film-coated tablet than for an uncoated tablet. Since an uncoated tablet has many voids, pigments may continue to penetrate therein over time, causing discoloration on the printed surface, and the discoloration may relatively reduce the effect of light or moisture.

### (Internal-sizing resin)

The inkjet ink of the present embodiment may contain an internal-sizing resin other than the above pigments or dispersion media. The internal-sizing resin that can be added to the inkjet ink of the present embodiment may be an edible resin-like material in the form of a water-soluble powder, paste or flakes which are capable of forming a coating on the surface of a tablet when dried after printing. Examples of the internal-sizing resin include polyvinyl alcohols (PVAs), hydroxypropyl celluloses (HPCs), hydroxypropyl methylcelluloses (HPMCs), polyvinylpyrrolidones (PVPs), high molecular weight polyethylene glycols (PEGs) such as polyethylene glycol 4000 or polyethylene glycol 1540, shellac resins, methacrylic acid copolymers (product name: Eudragit S100), maltodextrins, and erythritols.

### (Leveling agent)

The inkjet ink of the present embodiment may contain a leveling agent other than the above pigments, dispersion media or internal-sizing resins. The levelling agent that can be added to the inkjet ink of the present embodiment may only need to be an edible and water-soluble surfactant. Examples of the levelling agent include polyglycerin fatty acid ester (e.g., Decaglyceryl distearate Q-182S or Decaglyceryl monolaurate Q-12S manufactured by Taiyo Kagaku Co.,Ltd.), sorbitan fatty acid ester (e.g., NIKKOLSL-10 manufactured by Nikko Chemicals Co., Ltd.), sugar ester (e.g., DK Ester F-110 manufactured by DKS Co. Ltd.), and polysorbate (Emazole S-120 series manufactured by Kao Corporation).

### [Printing method]

The printing method using the inkjet ink of the present embodiment is not particularly limited, but printing using an inkjet device, such as a commercially available inkjet printer, may be used. Therefore, the inkjet ink of the present embodiment has a wide range of applications and is very useful. For example, the inkjet ink of the present embodiment can be printed using a drop-on-demand inkjet device including a piezoelectric element (piezoelectric ceramic) as an actuator, or inkjet devices of other types.

Examples of the drop-on-demand inkjet device include a thermal-inkjet type device ejecting an inkjet ink using water vapor pressure generated by instantaneously heating a microheating element to a high temperature (of 200 to 300°C), an electrostatic-type device ejecting an inkjet ink by electrostatically vibrating an actuator, and an ultrasonic-type device using an ultrasonic cavitation phenomenon. If the inkjet ink of the present embodiment has charging performance, a continuous injection-type device may be used.

### [Tablet]

The inkjet ink of the present embodiment may be used for printing characters or an image on the surfaces of tablets, for example, using the above methods. The following description explains a configuration of a tablet having an image printed using the inkjet ink of the present embodiment.

The tablet of the present embodiment is, for example, a pharmaceutical tablet. Examples of the pharmaceutical tablet herein include film-coated tablets having an outermost surface on which a water-soluble surface layer is formed, as well as uncoated tablets (bare tablets), sugarcoated tablets, enteric tablets, and orally disintegrating tablets.

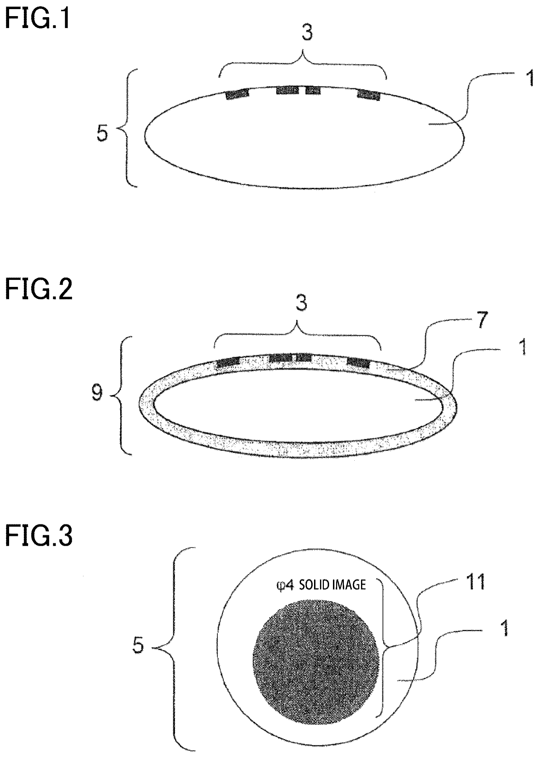

Fig. 1 is a schematic cross-sectional view illustrating an example of a pharmaceutical tablet (uncoated tablet) having a print (characters or image). Fig. 1 shows a cross section of an uncoated printed tablet 5 in which a printed image 3 such as of characters is printed on the top surface of a tablet body 1.

Fig. 2 is a schematic cross-sectional view illustrating an example of a pharmaceutical tablet (film-coated tablet) having a print (characters or image). Fig. 2 shows a cross section of a film-coated printed tablet 9 in which a printed image 3 such as of characters is printed on the top surface of a tablet 1 covered with a film coating layer 7.

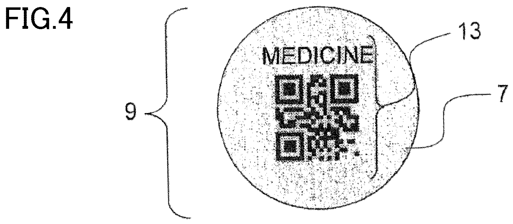

In the present embodiment, a solid image may be printed as an uncoated tablet printed image 11 as shown in Fig. 3, or a two-dimensional barcode may be printed as a film-coated tablet printed image 13 as shown in Fig. 4.

The pharmaceutical tablet may contain unlimited active ingredients. Examples of the active ingredients include, but are not limited thereto, substances effective for preventing or treating various diseases (e.g., substances having a sleep-inducing effect, tranquilizer activity, antibacterial activity, antihypertensive effect, anti-angina activity, analgesic effect, antiinflammatory activity, tranquilizing effect, diabetes treatment activity, diuretic effect, anticholinergic activity, anti-hyperacidity effect, antiepileptic effect, ACE inhibitory activity, β-receptor antagonist or agonist activity, anesthetic action, appetite suppressant action, antiarrhythmic effect, antidepressant effect, anticoagulant activity, antidiarrheal effect, antihistamine activity, antimalarial effect, antitumor activity, immunosuppressive activity, antiparkinsonian effect, antipsychotic effect, antiplatelet activity, and antihyperlipidemic effect), substances having a scavenging effect, and substances having a scent or a deodorant action.

In the tablet of the present embodiment, carriers which are compatible, from the perspective of usage, with the active ingredients may be mixed as necessary. For example, pharmaceutical tablets may comprise carriers which are compatible from the pharmaceutical perspective. As carriers compatible from the pharmaceutical perspective, various organic or inorganic carriers, which are commonly used as pharmaceutical materials, may be appropriately mixed, such as excipients, lubricants, binders, disintegrants, and thickeners. As necessary, additives such as antiseptics, antioxidants, colorants, or sweeteners may be used.

Although the present embodiment has been described taking an example of a pharmaceutical tablet as a tablet, tablet is not limited to this tablet of the present invention. The printing target of the inkjet ink of the present embodiment is not particularly limited. For example, the inkjet ink of the present embodiment may be printed on the surfaces of various tablets, including tablets to be administered to non-human animals (e.g., pets, livestock, poultry, etc.), or tablets of feed, fertilizers, cleaning agents, and food such as soda-pop flavored confectionery. The inkjet ink of the present embodiment does not particularly limit the size of the printing target, but may be applied to tablets of various sizes.

### (Effects of the present embodiment)

(1) The inkjet ink according to the present embodiment comprises a pigment and a monovalent alcohol, wherein the pigment consists solely of sodium copper chlorophyllin, the monovalent alcohol consists solely of either ethanol or 1-propanol, the sodium copper chlorophyllin has a concentration in the range of 1 mass% or more and 15 mass% or less relative to the total mass of the ink, the ethanol has a concentration in the range of 6.5 mass% or more and 20 mass% or less relative to the total mass of the ink, and the 1-propanol has a concentration in the range of 6.5 mass% or more and 15 mass% or less relative to the total mass of the ink.

With this formulation, even when an inkjet ink, in which food pigments comprising at least sodium copper chlorophyllin are dispersed in a dispersion medium containing a monovalent alcohol, is stored for a long period of time, occurrence of aggregates derived from the sodium copper chlorophyllin can be reduced compared to the inks of conventional art, and therefore head failure or the like can be prevented which is due to the aggregates causing blockages inside the inkjet head.

(2) The inkjet ink according to the present embodiment comprises a pigment and a monovalent alcohol, wherein the pigment comprises sodium copper chlorophyllin and other colorants different from the sodium copper chlorophyllin, the monovalent alcohol is either one of ethanol and 1-propanol, the sodium copper chlorophyllin has a concentration in the range of 1 mass% or more and 15 mass% or less relative to the total mass of the ink, the other colorants have a concentration of 50 mass% or less relative to the mass of the sodium copper chlorophyllin, the ethanol has a concentration in the range of 6.5 mass% or more and 20 mass% or less relative to the total mass of the ink, and the 1-propanol has a concentration in the range of 6.5 mass% or more and 15 mass% or less relative to the total mass of the ink.

With this formulation, occurrence of aggregates derived from the sodium copper chlorophyllin can be reliably suppressed compared to the inks of the conventional art, and can prevent head failure or the like due to the aggregates causing blockages inside the inkjet head.

(3) The inkjet ink according to the present embodiment may contain at least one of Tartrazine, Erythrosine, and Brilliant Blue FCF as a colorant other than the sodium copper chlorophyllin.

With this formulation, occurrence of aggregates derived from the sodium copper chlorophyllin can be further suppressed compared to the inks of the conventional art, and can prevent head failure or the like due to the aggregates causing blockages inside the inkjet head. With this formulation, the inkjet ink can have a gray hue. Inks presenting a gray hue have a wide range of use and high versatility.

(4) The inkjet ink according to the present embodiment may further contain propylene glycol as a dispersion medium, and the content of the propylene glycol may be in the range of 10 mass% or more and 30 mass% or less relative to the total mass of the ink.

With this formulation, drying speed at the nozzle of the inkjet head during printing may be reduced and deterioration of printability can be further reduced.

(5) The inkjet ink according to the present embodiment comprises a pigment, a monovalent alcohol, and propylene glycol, wherein the pigment comprises sodium copper chlorophyllin and other colorants different from the sodium copper chlorophyllin, the monovalent alcohol consists solely of ethanol, the sodium copper chlorophyllin has a concentration in the range of 1 mass% or more and 15 mass% or less relative to the total mass of the ink, the other colorants have a concentration of 50 mass% or less relative to the mass of the sodium copper chlorophyllin, the ethanol has a concentration in the range of 6.5 mass% or more and 20 mass% or less relative to the total mass of the ink, the colorants other than the sodium copper chlorophyllin include Erythrosine and Brilliant Blue FCF, and the propylene glycol has a concentration in the range of 10 mass% or more and 30 mass% or less relative to the total mass of the ink.

With this formulation, occurrence of aggregates derived from the sodium copper chlorophyllin can be reliably suppressed compared to the inks of the conventional art, and can prevent head failure or the like due to the aggregates causing blockages inside the inkjet head.

(6) Other colorants contained in the inkjet ink according to the present embodiment may have a concentration that is 15.8 mass% or less relative to the mass of the sodium copper chlorophyllin.

With this formulation, occurrence of aggregates derived from the sodium copper chlorophyllin can be reliably suppressed compared to the inks of the conventional art, and can prevent head failure or the like due to the aggregates causing blockages inside the inkjet head.

(7) The propylene glycol contained in the inkjet ink according to the present embodiment may have a concentration that is in the range of 23 mass% or more and 30 mass% or less relative to the total mass of the ink.

With this formulation, drying speed at the nozzle of the inkjet head during printing may be reduced compared to the inks of the conventional art, and deterioration of printability can be further reduced.

(8) The sodium copper chlorophyllin contained in the inkjet ink according to the present embodiment may have a concentration that is 1 mass% or more and 5.7 mass% or less relative to the mass of the total mass of the ink.

With this formulation, occurrence of aggregates derived from the sodium copper chlorophyllin can be reliably suppressed compared to the inks of the conventional art, and can prevent head failure or the like due to the aggregates causing blockages inside the inkjet head.

(9) The ethanol contained in the inkjet ink according to the present embodiment may have a concentration that is in the range of 6.5 mass% or more and 10.0 mass% or less relative to the total mass of the ink.

With this formulation, occurrence of aggregates derived from the sodium copper chlorophyllin can be reliably suppressed compared to the inks of the conventional art, and can prevent head failure or the like due to the aggregates causing blockages inside the inkjet head.

(10) Water contained in the inkjet ink according to the present embodiment may have a concentration that is in the range of 60.4 mass% or more and 63.9 mass% or less relative to the total mass of the ink.

With this formulation, occurrence of aggregates derived from the sodium copper chlorophyllin can be reliably suppressed compared to the inks of the conventional art, and can prevent head failure or the like due to the aggregates causing blockages inside the inkjet head.

(11) The inkjet head according to the present embodiment may have a mode of comprising only a pigment, a monovalent alcohol, water, and propylene glycol.

With this formulation, occurrence of aggregates derived from the sodium copper chlorophyllin can be reliably suppressed compared to the inks of the conventional art, and can prevent head failure or the like due to the aggregates causing blockages inside the inkjet head.

(12) The inkjet ink according to the present embodiment may be directly printed on the surfaces of tablets or food, or may be used for packages directly contacting pharmaceutical products or food.

With this configuration, the inkjet ink can be directly printed on the surfaces of tablets or food, or can be used for packages directly contacting pharmaceutical products or food.

(13) The tablet according to the present embodiment is provided with a printed image 3 which is printed using the inkjet ink described above.

With this configuration, the printed image portion on the surface of the tablet can be imparted with edibility.

(14) The tablet according to the present embodiment may be a pharmaceutical tablet.

With this configuration, the printed image portion on the surface of the pharmaceutical tablet can be imparted with edibility.

### [Examples]

The present invention will be further described in detail using examples; however the present invention should not be limited to these examples.

### (Production of inkjet ink)

A procedure of preparing an inkjet ink will be described.

The inkjet ink contains components of pigments (dyes), a monovalent alcohol, water, and propylene glycol. In the procedure of preparing an inkjet ink, first, a mixed solvent was obtained by mixing water with a monovalent alcohol. Next, propylene glycol was added to the mixed solvent to obtain a clear base liquid. Finally, pigments (dyes) were added to the clear base liquid. Thus, an ink related to each example was prepared. The individual components will be specifically described below.

As the pigments (dyes) composing the ink, sodium copper chlorophyllin (green pigment), Food Red No. 3, Food Blue No. 1, and Food Yellow No. 4 were used.

As water composing the ink, purified water (ion-exchanged water) was used.

As the monovalent alcohol composing the ink, ethanol, 1-propanol (NPA), or 2-propanol (IPA) was used.

In each example, the above components were stirred and mixed to prepare a clear base liquid. After that, the pigments were mixed to obtain inkjet inks of Examples 1 to 23 and Comparative Examples 1 to 19. Tables 1 to 4 show compositions of the inkjet inks obtained in this way. In Tables 1 to 4, the mark "-" indicates that the material is not used.

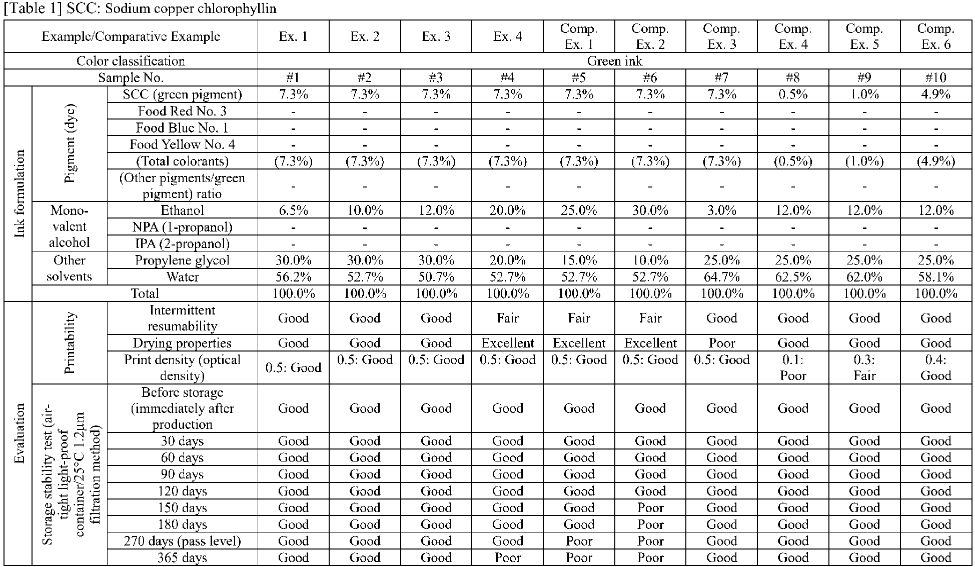

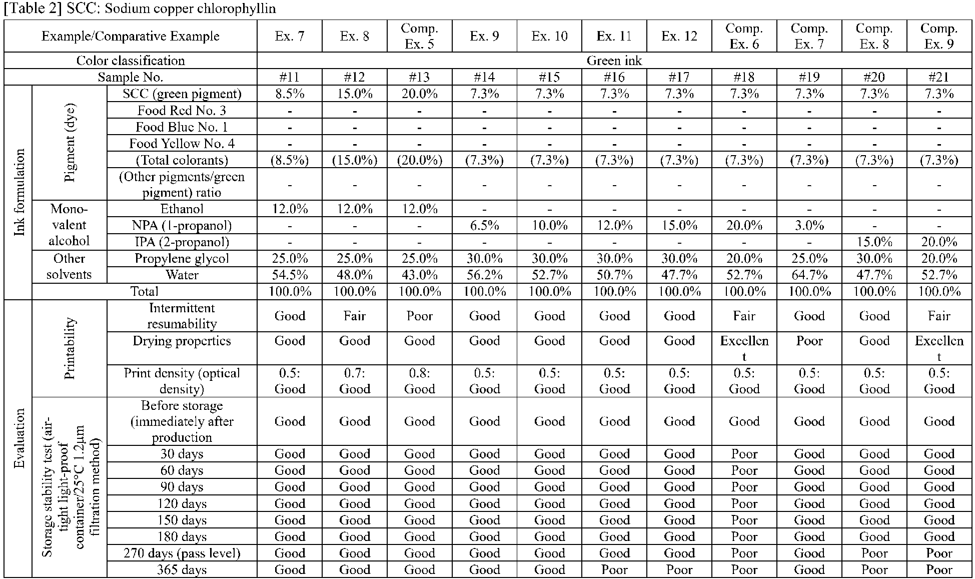

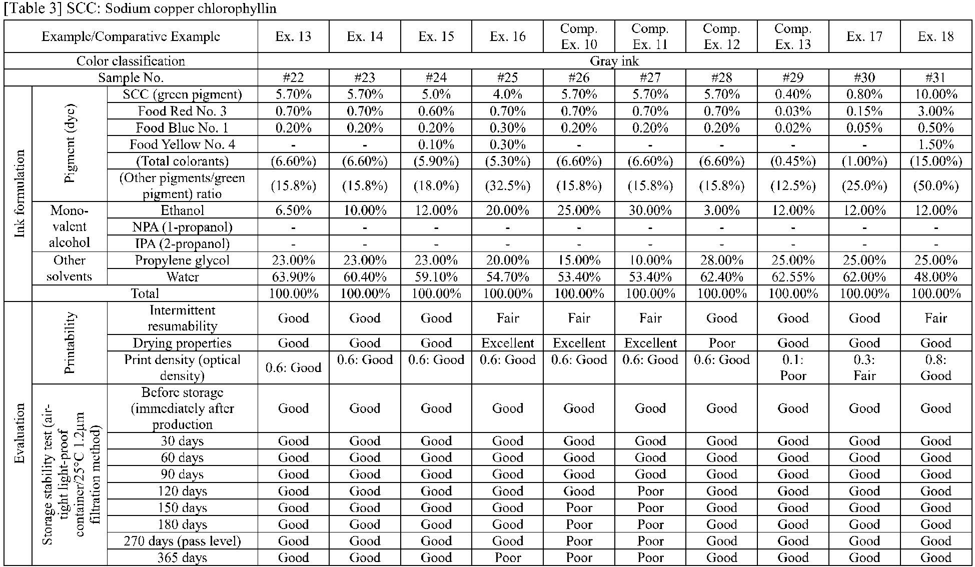

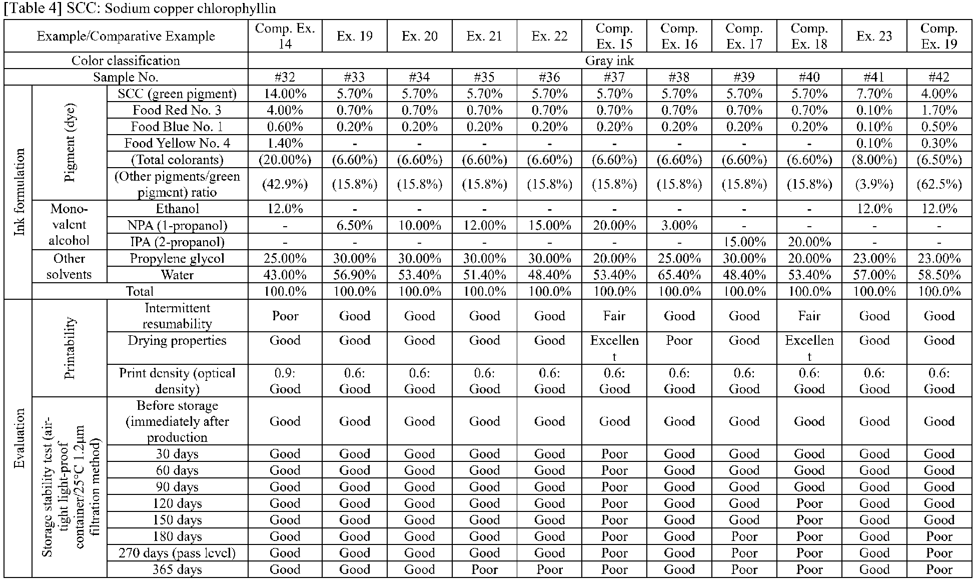

### (Filtering)

All the produced inks were subjected to filtering for the purpose of removing foreign matter or impurities that had been mixed into the materials used for preparing the inks or were mixed into the materials in the production procedure, and aggregates derived from the sodium copper chlorophyllin originally contained in the materials. Specifically, each of the prepared inks was filtered (passed) once through a membrane filter with a 5.0 µm pore size (Minisart 5.0 µm, cellulose acetate membrane, manufactured by Sartorius AG), then filtered (passed) once through a membrane filter with a 0.8 µm pore size (Minisart 0.8 µm, cellulose acetate membrane, manufactured by Sartorius AG), and then at this point it was confirmed that filtering was completed smoothly.

200 g of each filtered ink was weighed out and filtered (passed) once through a membrane filter with a 1.2 µm pore size (MF-Millipore membrane, cellulose mixed ester, 1.2 µm, 47 mm diameter, manufactured by Merck). After completing filtering, since the ink remained soaked in the filter used, the ink-stained filter was washed with 200 g of purified water to remove any material from the filter that was soluble in the purified water. In this case, it was confirmed that the ink on the filter was completely dissolved in the purified water. Thus, before starting the storage stability test (1.2 µm filtration method) to be performed later, it was confirmed that the ink did not contain any aggregates derived from sodium copper chlorophyllin.

### (Intermittent resumability test)

A piezoelectric ceramic-driven drop-on-demand inkjet head having a print resolution of 600 dpi in the main scanning direction, 600 dpi in the sub-scanning direction (conveyance direction of the recording medium such as a tablet) and having a total of 2,656 nozzles, was left for a specified period of time (15 to 60 minutes) without flushing, and then using the head, a test pattern was printed at a print drop amount of 6 pl per drop, and it was confirmed that the ink was ejected from all nozzles without any non-ejected ink remaining. In Tables 1 to 4, a standing period of time after which the ink could still be ejected was measured as an evaluation for intermittent resumability. The evaluation criteria were as follows.
Good: 30 minutes or longer
Fair: 15 minutes or longer and less than 30 minutes
Poor: Less than 15 minutes

### (Test of tablet drying properties (transfer resistance))

Using a piezoelectric ceramic-driven drop-on-demand inkjet head having a print resolution of 600 dpi in the main scanning direction and 600 dpi in the sub-scanning direction (conveyance direction of the recording medium such as a tablet) and having 2,656 nozzles in total, an image was printed using the inkjet inks of the examples and comparative examples at 10 pl per drop.

10 seconds after printing, white copy paper pasted on a digital force gauge was brought into contact with the tablet subjected to printing, for 0.4 to 0.5 seconds at a pressure of 4 to 5 N to confirm that the printed ink was not transferred. Tables 1 to 4 show evaluations for transfer resistance (drying properties) as a result of visual observation of the density of the transferred ink. The evaluation criteria were as follows.
Excellent: There was no ink transfer.
Good: Ink was slightly transferred but difficult to visually recognize.
Poor: Ink was densely transferred.

### (Print density (optical density) measuring method and measuring device)

Next, a spectral densitometer X-Rite 530, which was manufactured by X-Rite, Incorporated was placed on the printed solid image to measure a color tone (L*a*b* color system) of reflected light and optical densities of colors estimated from the reflected light. The settings were a 2° viewing angle and a D50 light source.

Black optical density (visual value, V value) was used to evaluate optical density. If the V value was 0.4 or greater, it was assumed that the optical density was sufficient for visual recognition, regardless of the print color tone. Other evaluation criteria were as follows.
Good: V value was 0.4 or greater.
Fair: V value was 0.2 or greater and less than 0.4.
Poor: V value was less than 0.2.

### (Storage stability test)

The inks of the examples and comparative examples, which were confirmed not to contain aggregates derived from the sodium copper chlorophyllin, were stored in a dark place at a temperature of 25 degrees and a relative humidity of 65%. After that, 200 g of each stored ink was weighed out after predetermined durations and passed through a membrane filter to evaluate the occurrence of precipitation based on whether the ink could be filtered without interruption. The membrane filter used had a 1.2 µm pore size (MF-Millipore membrane, cellulose mixed ester, 1.2 µm, 47 mm diameter, manufactured by Merck), through which each ink was passed once. After completing filtering, since the ink remained soaked in the filter used, the ink-stained filter was washed with 200 g of purified water to remove any material from the filter that was soluble in the purified water. After this process, the filter was examined to find whether any residue remained thereon. If any residue was found, the residue was dissolved in methanol (ammonia basic methanol) and the solution was subjected to measurement of UV-visible absorption spectrum to examine whether the residue contained aggregates derived from the sodium copper chlorophyllin. If the residue was confirmed to contain aggregates derived from the sodium copper chlorophyllin, it was assumed that aggregates derived from the sodium copper chlorophyllin occurred during the storage period. The timings of weighing out each ink were 30 days, 60 days, 120 days, 150 days, 180 days, 270 days, and 365 days after start of storage. Whether each ink was at a pass level was determined based on whether the aggregates were generated at the point of 270 days after start of storage, and if no aggregates were found, the ink was determined to be at a pass level. The reason why the period of pass level was set to 270 days after start of storage was that, as a result of opinion tests conducted by the inventors together with various medical professionals, 270 days after start of storage were required as the period during which the ink must be kept free of aggregates. The tests were conducted until 365 days after start of storage. If no aggregates were generated at the point of 365 days, the ink was regarded to be especially excellent.

Being an ink that has passed the storage stability tests means that occurrence of aggregates is suppressed in the ink, and therefore the ink can prevent the occurrence of head failure which is due to the aggregates causing blockages inside the inkjet head.

It could be understood from the above that the occurrence of head failure due to aggregates causing blockages inside the inkjet head can be prevented even after the inkjet ink has been stored for a long period of time, as long as the the pigment consists solely of sodium copper chlorophyllin, the monovalent alcohol consists solely of ethanol or solely of 1-propanol, the sodium copper chlorophyllin has a concentration in the range of 1 mass% or more and 15 mass% or less relative to the total mass of the ink, the ethanol has a concentration in the range of 6.5 mass% or more and 20 mass% or less relative to the total mass of the ink, and the 1-propanol has a concentration in the range of 6.5 mass% or more and 15 mass% or less relative to the total mass of the ink.

For example, the present invention can have the following configurations.
(1) An inkjet ink comprising a pigment and a monovalent alcohol, wherein
   the pigment consists solely of sodium copper chlorophyllin;
   the monovalent alcohol consists solely of ethanol or solely of 1-propanol;
   the sodium copper chlorophyllin has a concentration in the range of 1 mass% or more and 15 mass% or less relative to the total mass of the ink;
   the ethanol has a concentration in the range of 6.5 mass% or more and 20 mass% or less relative to the total mass of the ink; and
   the 1-propanol has a concentration in the range of 6.5 mass% or more and 15 mass% or less relative to the total mass of the ink.
(2) An inkjet ink comprising a pigment and a monovalent alcohol, wherein
   the pigment comprises sodium copper chlorophyllin and other colorants different from the sodium copper chlorophyllin;
   the monovalent alcohol consists solely of ethanol or solely of 1-propanol;
   the sodium copper chlorophyllin has a concentration in the range of 1 mass% or more and 15 mass% or less relative to the total mass of the ink;
   the other colorants have a concentration of 50 mass% or less relative to the mass of the sodium copper chlorophyllin;
   the ethanol has a concentration in the range of 6.5 mass% or more and 20 mass% or less relative to the total mass of the ink; and
   the 1-propanol has a concentration in the range of 6.5 mass% or more and 15 mass% or less relative to the total mass of the ink.
(3) The inkjet ink according to the above item (2), wherein the ink comprises at least one of Tartrazine, Erythrosine, and Brilliant Blue FCF as the colorants other than the sodium copper chlorophyllin.
(4) The inkjet ink according to any of the above items (1) to (3), wherein
   the ink further comprises propylene glycol as the dispersion medium; and
   the propylene glycol has a content in the range of 10 mass% or more and 30 mass% or less relative to a total mass of the ink.
(5) An inkjet ink comprising a pigment, a monovalent alcohol, water, and propylene glycol, wherein
   the pigment comprises sodium copper chlorophyllin and other colorants different from the sodium copper chlorophyllin;
   the monovalent alcohol consists solely of ethanol;
   the sodium copper chlorophyllin has a concentration in the range of 1 mass% or more and 15 mass% or less relative to the total mass of the ink;
   the other colorants have a concentration of 50 mass% or less relative to the mass of the sodium copper chlorophyllin;
   the ethanol has a concentration in the range of 6.5 mass% or more and 20 mass% or less relative to the total mass of the ink; and
   the colorants other than the sodium copper chlorophyllin include Erythrosine and Brilliant Blue FCF; and
   the propylene glycol has a concentration in the range of 10 mass% or more and 30 mass% or less relative to the total mass of the ink.
(6) The inkjet ink according to the above item (5), wherein the other colorants have a concentration of 15.8 mass% or less relative to the mass of the sodium copper chlorophyllin.
(7) The inkjet ink according to the above item (5) or (6), wherein the propylene glycol has a concentration in the range of 23 mass% or more and 30 mass% or less relative to the total mass of the ink.
(8) The inkjet ink according to any one of the above items (5) to (7), wherein the sodium copper chlorophyllin has a concentration in the range of 1 mass% or more and 5.7 mass% or less relative to a total mass of the ink.
(9) The inkjet ink according to any one of the above items (5) to (8), wherein the ethanol has a concentration in the range of 6.5 mass% or more and 10.0 mass% or less relative to the total mass of the ink.
(10) The inkjet ink according to any one of the above items (5) to (9), wherein the water has a concentration in the range of 60.4 mass% or more and 63.9 mass% or less relative to the total mass of the ink.
(11) The inkjet ink according to any one of the above items (5) to (10), comprising only the pigment, the monovalent alcohol, the water, and the propylene glycol.
(12) The inkjet ink according to any one of the above items (1) to (11), wherein the inkjet ink is used for direct printing on the surface of a tablet or direct printing on food, or used for a package directly contacting a pharmaceutical product or food.
(13) A tablet including a printed portion printed using the inkjet ink according to any one of the above items (1) to (11).
(14) The tablet according to the above item (13), wherein the tablet is a pharmaceutical tablet.

### [Reference Signs List]

1: Tablet
3: Printed image
5: Uncoated printed tablet
7: Film coating layer
9: Film-coated printed tablet
11: Uncoated tablet printed image (solid image)
13: Film-coated tablet printed Image (two-dimensional barcode)

## Claims

1. An inkjet ink comprising a pigment and a monovalent alcohol, wherein
the pigment consists solely of sodium copper chlorophyllin;
the monovalent alcohol consists solely of ethanol or solely of 1-propanol;
the sodium copper chlorophyllin has a concentration in a range of 1 mass% or more and 15 mass% or less relative to a total mass of the ink;
the ethanol has a concentration in a range of 6.5 mass% or more and 20 mass% or less relative to a total mass of the ink; and
the 1-propanol has a concentration in a range of 6.5 mass% or more and 15 mass% or less relative to a total mass of the ink.

2. An inkjet ink comprising a pigment and a monovalent alcohol, wherein
the pigment comprises sodium copper chlorophyllin and other colorants different from the sodium copper chlorophyllin;
the monovalent alcohol consists solely of ethanol or solely of 1-propanol;
the sodium copper chlorophyllin has a concentration in a range of 1 mass% or more and 15 mass% or less relative to a total mass of the ink;
the other colorants have a concentration of 50 mass% or less relative to a mass of the sodium copper chlorophyllin;
the ethanol has a concentration in a range of 6.5 mass% or more and 20 mass% or less relative to a total mass of the ink; and
the 1-propanol has a concentration in a range of 6.5 mass% or more and 15 mass% or less relative to a total mass of the ink.

3. The inkjet ink according to claim 2, wherein the ink comprises at least one of Tartrazine, Erythrosine, and Brilliant Blue FCF as the colorants other than the sodium copper chlorophyllin.

4. The inkjet ink according to claim 1 or 2, wherein
the ink further comprises propylene glycol as the dispersion medium; and
the propylene glycol has a content in a range of 10 mass% or more and 30 mass% or less relative to a total mass of the ink.

5. An inkjet ink comprising a pigment, a monovalent alcohol, water, and propylene glycol, wherein
the pigment comprises sodium copper chlorophyllin and other colorants different from the sodium copper chlorophyllin;
the monovalent alcohol consists solely of ethanol;
the sodium copper chlorophyllin has a concentration in a range of 1 mass% or more and 15 mass% or less relative to a total mass of the ink;
the other colorants have a concentration of 50 mass% or less relative to a mass of the sodium copper chlorophyllin;
the ethanol has a concentration in a range of 6.5 mass% or more and 20 mass% or less relative to a total mass of the ink; and
the colorants other than the sodium copper chlorophyllin include Erythrosine and Brilliant Blue FCF; and
the propylene glycol has a concentration in a range of 10 mass% or more and 30 mass% or less relative to a total mass of the ink.

6. The inkjet ink according to claim 5, wherein the other colorants have a concentration of 15.8 mass% or less relative to a mass of the sodium copper chlorophyllin.

7. The inkjet ink according to claim 6 wherein, the propylene glycol has a concentration in a range of 23 mass% or more and 30 mass% or less relative to a total mass of the ink.

8. The inkjet ink according to claim 7, wherein the sodium copper chlorophyllin has a concentration in a range of 1 mass% or more and 5.7 mass% or less relative to a total mass of the ink.

9. The inkjet ink according to claim 8, wherein the ethanol has a concentration in the range of 6.5 mass% or more and 10.0 mass% or less relative to a total mass of the ink.

10. The inkjet ink according to claim 9, wherein the water has a concentration in a range of 60.4 mass% or more and 63.9 mass% or less relative to a total mass of the ink.

11. The inkjet ink according to claim 10, comprising only the pigment, the monovalent alcohol, the water, and the propylene glycol.

12. The inkjet ink according to any one of claims 1 to 11, wherein the inkjet ink is used for direct printing on a surface of a tablet or direct printing on food, or used for a package directly contacting a pharmaceutical product or food.

13. A tablet including a printed portion printed using the inkjet ink according to any one of claims 1 to 11.

14. The tablet according to claim 13, wherein the tablet is a pharmaceutical tablet.
